# EUROPEAN PATENT APPLICATION

(11) **EP 4 797 343 A1**
(43) Date of publication of application: **26.08.2026**
(21) Application number: 24894154.4
(22) Date of filing: 20.11.2024
(51) Int. Cl.: H01M 4/136, H01G 11/24, H01G 11/30, H01G 11/42, H01G 11/60, H01M 4/36, H01M 4/58, H01M 10/052, H01M 10/054, H01M 10/0567, H01M 10/0569

(54) **POSITIVE ELECTRODE FOR NONAQUEOUS ELECTROLYTE POWER STORAGE ELEMENTS, AND NONAQUEOUS ELECTROLYTE POWER STORAGE ELEMENT**

(30) Priority: 22.11.2023 JP 2023198681
(71) Applicant: GS Yuasa International Ltd., Kisshoin, Minami-ku, Kyoto-shi, Kyoto 601-8520 (JP)
(72) Inventor: HARADA, Ryo, Kyoto-shi, Kyoto 601-8520 (JP); FUJISAWA, Tomoki, Kyoto-shi, Kyoto 601-8520 (JP); MIZUNO, Yusuke, Kyoto-shi, Kyoto 601-8520 (JP); SETO, Shohei, Kyoto-shi, Kyoto 601-8520 (JP)
(74) Representative: Isarpatent
(86) International application number: PCT/JP2024/041055
(87) International publication number: WO 2025/110163

(57) **Abstract**

A positive electrode for a nonaqueous electrolyte energy storage device according to one aspect of the present invention includes a positive active material layer containing a composite of a sulfur-based active material and porous carbon, and the porous carbon has an average pore size of 3 nm or less, and the positive active material layer has a mass per unit area of 5 mg/cm² or more.

## Description

### TECHNICAL FIELD

The present invention relates to a positive electrode for a nonaqueous electrolyte energy storage device and a nonaqueous electrolyte energy storage device.

### BACKGROUND ART

Nonaqueous electrolyte secondary batteries represented by lithium ion secondary batteries are often used for electronic devices such as personal computers and communication terminals, automobiles, and the like, because the batteries are high in energy density. The nonaqueous electrolyte secondary battery generally includes a pair of electrodes, which are electrically separated from each other by a separator, and a nonaqueous electrolyte interposed between the electrodes, and is configured to allow charge-carrying ions such as lithium ions to be transported between the two electrodes to perform charge-discharge. In addition, capacitors such as lithium ion capacitors and electric double layer capacitors are also widely used as nonaqueous electrolyte energy storage devices other than the nonaqueous electrolyte secondary batteries.

As nonaqueous electrolyte energy storage devices, nonaqueous electrolyte energy storage devices, such as lithium-sulfur batteries (Li-S batteries), in which a sulfur-based active material is used as a positive active material are known (see Patent Document 1). A sulfur-based active material has a large theoretical capacity, and a nonaqueous electrolyte energy storage device in which a sulfur-based active material is used as a positive active material is expected as an energy storage device having a high energy density. In addition, a sulfur-based active material has low electron conductivity, and therefore a composite of a sulfur-based active material and a conductive agent such as carbon may be used in a positive electrode.

### PRIOR ART DOCUMENT

### PATENT DOCUMENT

Patent Document 1: JP-A-2010-95390

### SUMMARY OF THE INVENTION

### PROBLEMS TO BE SOLVED BY THE INVENTION

In order to further increase the energy density of a nonaqueous electrolyte energy storage device in which a sulfur-based active material is used as a positive active material, it is desirable to increase the energy density per mass of the entire positive electrode including the positive active material and other constituents.

An object of the present invention is to provide a positive electrode for a nonaqueous electrolyte energy storage device having a high energy density per mass of the positive electrode, and a nonaqueous electrolyte energy storage device including such a positive electrode for a nonaqueous electrolyte energy storage device.

### MEANS FOR SOLVING THE PROBLEMS

A positive electrode for a nonaqueous electrolyte energy storage device according to one aspect of the present invention includes a positive active material layer containing a composite of a sulfur-based active material and porous carbon, and the porous carbon has an average pore size of 3 nm or less, and the positive active material layer has a mass per unit area of 5 mg/cm² or more.

A nonaqueous electrolyte energy storage device according to another aspect of the present invention includes the positive electrode for a nonaqueous electrolyte energy storage device according to one aspect of the present invention.

### ADVANTAGES OF THE INVENTION

According to any one aspect of the present invention, it is possible to provide a positive electrode, for a nonaqueous electrolyte energy storage device, having a high energy density per mass of the positive electrode, and a nonaqueous electrolyte energy storage device including such a positive electrode for a nonaqueous electrolyte energy storage device.

### BRIEF DESCRIPTION OF THE DRAWINGS

Fig. 1 is a transparent perspective view illustrating an embodiment of a nonaqueous electrolyte energy storage device.
Fig. 2 is a schematic view illustrating an embodiment of an energy storage apparatus formed by assembling a plurality of nonaqueous electrolyte energy storage devices.

### MODE FOR CARRYING OUT THE INVENTION

First, outlines of a positive electrode for a nonaqueous electrolyte energy storage device and a nonaqueous electrolyte energy storage device disclosed in the present specification will be described.
(1) A positive electrode for a nonaqueous electrolyte energy storage device according to one aspect of the present invention includes a positive active material layer containing a composite of a sulfur-based active material and porous carbon, and the porous carbon has an average pore size of 3 nm or less, and the positive active material layer has a mass per unit area of 5 mg/cm² or more.

The positive electrode for a nonaqueous electrolyte energy storage device (hereinafter, also simply referred to as "positive electrode") described in (1) above has a high energy density per mass of the positive electrode. The reason for this is not clear, but the following reason is presumed. If the positive active material layer has a large mass per unit area of 5 mg/cm² or more, the mass ratio of the positive active material layer in the positive electrode becomes relatively high. This means that the mass ratio of the sulfur-based active material as the positive active material is relatively high, and as a result, the energy density per mass of the positive electrode is increased. In the case of using porous carbon having an average pore size of more than 3 nm, the energy density per mass of the positive electrode is not increased even if the positive active material layer has a large mass per unit area, and conversely, the energy density may be decreased. The reason for this is not clear, but the following reason is presumed. A composite of a sulfur-based active material and porous carbon (hereinafter, also simply referred to as "composite") generally has a form in which the sulfur-based active material is supported in pores of the porous carbon. Typically, at the time of initial discharge, a component contained in a nonaqueous electrolyte is decomposed to form a film (also referred to as SEI, reactive layer, or the like) on the composite surface. Here, in a case where the porous carbon has a large pore size, the following influence is considered. That is, the nonaqueous electrolyte easily penetrates into the pores, so that the contact area between the sulfur-based active material supported in the porous carbon and the nonaqueous electrolyte becomes large, and the amount of the film formed on the composite surface is increased. That is, in a case where the porous carbon has a large pore size, an excessive film is formed on the composite to decrease the void volume in the positive active material layer. It is presumed that in such a state in which the positive active material layer has a large mass per unit area, that is, the positive active material layer is thick, charge-carrying ions in the nonaqueous electrolyte are less likely to diffuse to a deep position in the positive active material layer, so that the energy density per mass of the positive electrode is less likely to be increased. Meanwhile, in the positive electrode described in (1) above in which porous carbon having a small pore size is used, the void volume in the positive active material layer is sufficiently maintained, and even if the positive active material layer is thick, charge-carrying ions in the nonaqueous electrolyte are likely to diffuse to a deep position in the positive active material layer. From the above, it is presumed that the positive electrode described in (1) above has a high energy density per mass of the positive electrode.

The "average pore size" of the porous carbon is a value measured with the following method. First, the pore size distribution is measured using a nitrogen adsorption method. This measurement can be performed using "autosorb iQ" manufactured by Quantachrome Instruments, Inc. Five points are extracted from a region having P/P0 of 0.06 to 0.3 in the acquired adsorption isotherm, BET plotting is performed, and the BET specific surface area is calculated from the y-intercept and the slope of the straight line. The pore volume is calculated from the total amount of the adsorbed gas in the pore size distribution measurement using the BJH method. Assuming that each pore is cylindrical, the pore volume V and the pore surface area A are expressed by the following equations. $V = π \times {\left(d/2\right)}^{2} \times H$ $A = π \times d \times H$ d: pore size, H: depth of pore (corresponding to height of cylinder)

In calculating the surface area, the area of a surface corresponding to a bottom surface of the cylinder can be ignored. From the two equations, the equation d = 4V/A is derived. Therefore, the average pore size d can be calculated from the equation d = 4V/A using the values of the BET specific surface area A and the pore volume V.

The "mass per unit area (mg/cm²) of the positive active material layer" refers to the mass (mg) of the positive active material layer per unit area (1 cm²) of the positive active material layer. The area of the positive active material layer is the area of one surface of the positive active material layer. For example, in a case where the positive active material layer is provided by coating, the area of the positive active material layer is equal to the area coated with the positive active material layer. For example, in a case where a positive electrode substrate has both surfaces each coated with the positive active material layer in an amount (in terms of solid content) of 10 mg/cm², the "mass per unit area of the positive active material layer" is 10 mg/cm². Also in a case where a positive electrode substrate has one surface coated with the positive active material layer in an amount (in terms of solid content) of 10 mg/cm², the "mass per unit area of the positive active material layer" is 10 mg/cm². That is, in the positive active material layer provided on one surface or both surfaces of a positive electrode substrate, the "mass per unit area of the positive active material layer" is the mass per unit area of the positive active material layer on one surface.

(2) A nonaqueous electrolyte energy storage device according to another aspect of the present invention includes the positive electrode described in (1) above.

Since the nonaqueous electrolyte energy storage device described in (2) above includes the positive electrode described in (1) above, the nonaqueous electrolyte energy storage device has a high energy density per mass of the positive electrode.

(3) The nonaqueous electrolyte energy storage device described in (2) above may further include a nonaqueous electrolyte containing a nonaqueous solvent containing a carbonate as a main component of the nonaqueous solvent.

The nonaqueous electrolyte energy storage device described in (3) above has a higher energy density per mass of the positive electrode.

The "main component" in the nonaqueous solvent means a component contained at a content of 50 vol% or more in the nonaqueous solvent.

The content of each component contained in the nonaqueous solvent is measured by liquid chromatography-mass spectrometry (LC-MS) and gas chromatography-mass spectrometry (GC-MS). Specifically, the measurement will be performed as follows. The measurement by LC-MS and the measurement by GC-MS are each performed under the same condition, and are performed continuously.

### 1. Collection of nonaqueous electrolyte

First, the nonaqueous electrolyte energy storage device is disassembled, and the nonaqueous electrolyte is taken out. In a case where the nonaqueous electrolyte cannot be taken out, the nonaqueous electrolyte energy storage device is centrifuged, and thus the nonaqueous electrolyte is taken out. In a case where the nonaqueous electrolyte cannot be taken out by centrifugation, an extraction solvent (for example, acetonitrile) is injected into the nonaqueous electrolyte energy storage device, and the nonaqueous electrolyte diluted with the extraction solvent is taken out.

### 2. LC-MS

A component in the collected nonaqueous electrolyte is analyzed by LC-MS. The LC-MS analysis is performed in the following order of qualitative analysis and quantitative analysis. As an apparatus for LC-MS analysis, "Acquity H" and "Xevo G2-5QTof" manufactured by Waters Corporation are used. Water is used as an eluent.

### (Qualitative analysis)

The measurement sample (nonaqueous electrolyte) is subjected to LC-MS analysis. In a case where peaks of the obtained liquid chromatogram cannot be separated, GC-MS analysis described below is performed instead of LC-MS analysis. In a case where peaks can be separated, a component contained in the measurement sample is predicted from the MS spectrum of each peak. A known sample of the predicted component (hereinafter, referred to as "prediction component") is subjected to LC-MS analysis. The retention time and the MS spectrum of the peak corresponding to each prediction component of the measurement sample are compared with the retention time and the MS spectrum of the peak of the known sample of the prediction component, and if the retention times coincide and the MS spectra coincide, the prediction is presumed to be correct.

### (Quantitative analysis)

The quantitative analysis is performed with a calibration curve method. First, a known sample of the prediction component having a known concentration is measured by LC-MS, the area of the peak is determined, and thus a calibration curve is prepared. The calibration curve is prepared so that the determination coefficient (r²) is 0.999 or more and 1 or less. The content of the prediction component in the measurement sample is determined from the calibration curve and the area of the peak of the prediction component of the measurement sample. The above operation is performed for all peaks detected by LC-MS analysis of the measurement sample, and the content of each prediction component is determined.

### 3. GC-MS

The analysis by GC-MS is performed in the following order of qualitative analysis and quantitative analysis. As an apparatus for GC-MS analysis, "5975C" manufactured by Agilent Technologies, Inc. is used. As a carrier gas, argon is used.

### (Qualitative analysis)

The measurement sample (nonaqueous electrolyte) is subjected to GC-MS analysis. A component contained in the sample is predicted from the MS spectrum of each peak of the obtained gas chromatogram. A known sample of the prediction component is subjected to GC-MS analysis. The retention time and the MS spectrum of the peak corresponding to each prediction component of the measurement sample are compared with the retention time and the MS spectrum of the peak of the known sample of the prediction component, and if the retention times coincide and the MS spectra coincide, the prediction is presumed to be correct.

### (Quantitative analysis)

The quantitative analysis is performed with a calibration curve method. The quantitative analysis by GC-MS is performed in the same procedure as the quantitative analysis by LC-MS described above, and the content of each prediction component is determined.

### 4. Calculation of content of each component

The total content of the prediction components (that is, the components) measured by LC-MS or GC-MS is taken as the content of the nonaqueous solvent, and thus the content of each component in the nonaqueous solvent is calculated. The content (vol%) of each component in the nonaqueous solvent is calculated using a value obtained by converting the content by mass of each component measured by LC-MS or GC-MS into a volume at 20°C, and the total content of the components in terms of volume is taken as the content of the nonaqueous solvent. In the case of using an extraction solvent, the extraction solvent is excluded in the calculation.

In a nonaqueous electrolyte energy storage device in which a sulfur-based active material is used in a positive electrode, in the case of using a nonaqueous electrolyte containing a nonaqueous solvent containing an ether as a main component, a charge-discharge reaction proceeds by a shuttle reaction due to elution of a polysulfide formed in the positive electrode into the nonaqueous electrolyte. Meanwhile, in a nonaqueous electrolyte energy storage device in which a sulfur-based active material is used in a positive electrode, in the case of using a nonaqueous electrolyte containing a nonaqueous solvent containing a carbonate as a main component, the positive electrode and the nonaqueous electrolyte (carbonate or the like) react at the time of initial discharge to form a film on the composite surface in the positive electrode, and then charge-carrying ions diffuse in a solid phase through the film, and thus a charge-discharge reaction proceeds. As described above, in a nonaqueous electrolyte energy storage device in which sulfur is used in a positive electrode, it is considered that the reaction mechanism caused at the time of charge-discharge in the positive electrode is different between the case of using a nonaqueous electrolyte containing a nonaqueous solvent containing an ether as a main component and the case of using a nonaqueous electrolyte containing a nonaqueous solvent containing a carbonate as a main component. However, even if the main component of the nonaqueous electrolyte is not a carbonate and no film is formed on the composite surface, by increasing the mass per unit area of the positive active material layer, the mass ratio of the positive active material layer in the positive electrode is relatively increased, leading to an increase in the mass ratio of the sulfur-based active material as the positive active material. Therefore, the positive electrode according to (1) above and the nonaqueous electrolyte energy storage device according to (2) above can exhibit an effect of achieving a high energy density per mass of the positive electrode.

(4) In the nonaqueous electrolyte energy storage device described in (3) above, the carbonate may include a fluorinated cyclic carbonate and a non-fluorinated unsaturated cyclic carbonate.

The nonaqueous electrolyte energy storage device described in (4) above has a higher energy density per mass of the positive electrode. The reason for this is not clear, but the following reason is presumed. It is considered that if a fluorinated cyclic carbonate is contained, a film containing a component having high ion conductivity (such as LiF) is formed to increase the average discharge voltage. Meanwhile, it is considered that if a non-fluorinated unsaturated cyclic carbonate is contained, a film containing a polymer component (such as polyvinylene carbonate) is formed, and thus the discharge capacity per mass of the positive electrode may be increased. It is presumed that the energy density per mass of the positive electrode is further increased by forming a film containing both of these components.

In the nonaqueous electrolyte, an increase in the content of the fluorinated cyclic carbonate tends to increase the viscosity and decrease the ionic conductivity. In a case where the positive active material layer has a large mass per unit area of 5 mg/cm² or more, that is, the positive active material layer is thick, the nonaqueous electrolyte has a high viscosity, and as a result, in the thickness direction of the positive active material layer, the influence of a decrease in the permeability and the ion conductivity of the nonaqueous electrolyte is large. It is presumed that if a fluorinated cyclic carbonate and a non-fluorinated unsaturated cyclic carbonate are used together as a nonaqueous solvent to suppress an increase in viscosity of the nonaqueous electrolyte, the permeability and the ion conductivity of the nonaqueous electrolyte in the thickness direction in the positive active material layer are increased to further increase the energy density per mass of the positive electrode. Meanwhile, in a case where the positive active material layer has a small mass per unit area of less than 5 mg/cm², that is, the positive active material layer is thin, the influence of, for example, a decrease in permeability due to the high viscosity of the nonaqueous electrolyte is small. Therefore, in a case where the positive active material layer has a mass per unit area of less than 5 mg/cm², increasing the content of the fluorinated cyclic carbonate in the nonaqueous solvent results in a remarkable effect of increasing the ion conductivity of the film to be formed. Therefore, in a case where the positive active material layer has a mass per unit area of less than 5 mg/cm², the energy density per mass of the positive electrode is high if the nonaqueous solvent contains only a fluorinated cyclic carbonate. As described above, a solvent composition suitable for increasing the energy density per mass of the positive electrode depends on the mass per unit area of the positive active material layer.

A positive electrode for a nonaqueous electrolyte energy storage device, a nonaqueous electrolyte energy storage device, an energy storage apparatus, and a method of manufacturing a nonaqueous electrolyte energy storage device according to an embodiment of the present invention, and other embodiments will be described in detail. It is to be noted that the name of each structural member (each component) used in each embodiment may be different from the name of each structural member (each component) used in BACKGROUND ART.

### <Positive electrode for nonaqueous electrolyte energy storage device>

A positive electrode according to an embodiment of the present invention includes a positive electrode substrate and a positive active material layer disposed on the positive electrode substrate directly or with an intermediate layer interposed therebetween. The positive electrode is used in a nonaqueous electrolyte energy storage device, and is preferably used in a lithium-sulfur battery. The positive electrode can be suitably used in a nonaqueous electrolyte energy storage device including a nonaqueous electrolyte containing a carbonate, and can be more suitably used in a nonaqueous electrolyte energy storage device including a nonaqueous electrolyte containing a nonaqueous solvent containing a carbonate as a main component of the nonaqueous solvent.

The positive electrode substrate has conductivity. Whether the positive electrode substrate has "conductivity" is determined by using, as a threshold, a volume resistivity of 10⁻² Ω·cm measured in accordance with JIS-H-0505 (1975). As a material of the positive electrode substrate, a metal such as aluminum, titanium, tantalum, or stainless steel, or an alloy thereof is used. Among them, aluminum or an aluminum alloy is preferable from the viewpoint of electric potential resistance, high conductivity, and costs. Examples of the positive electrode substrate include foils, deposited films, meshes, and porous materials, and foils are preferable from the viewpoint of costs. Therefore, the positive electrode substrate is preferably an aluminum foil or an aluminum alloy foil. Examples of the aluminum or aluminum alloy include A1085, A3003, and A1N30 specified in JIS-H-4000 (2014) and JIS-H-4160 (2006).

The average thickness of the positive electrode substrate is preferably 3 µm or more and 50 µm or less, more preferably 5 µm or more and 40 µm or less, still more preferably 8 µm or more and 30 µm or less, and particularly preferably 10 µm or more and 25 µm or less. By setting the average thickness of the positive electrode substrate within the above range, the energy density per mass or volume of the positive electrode can be increased while the strength of the positive electrode substrate is increased. The "average thickness" means an average value of thicknesses measured at any five points.

The intermediate layer is a layer disposed between the positive electrode substrate and the positive active material layer. The intermediate layer contains a conductive agent such as carbon particles, and thus the contact resistance between the positive electrode substrate and the positive active material layer is reduced. The composition of the intermediate layer is not particularly limited, and the intermediate layer contains, for example, a binder and a conductive agent.

The positive active material layer contains a composite of a sulfur-based active material and porous carbon. The positive active material layer contains, as necessary, an optional component such as a conductive agent, a binder, a dispersant, a thickener, or a filler. The positive active material layer is typically formed using a positive composite containing the composite and another optional component.

In the composite, the sulfur-based active material is typically supported in pores of the porous carbon. In the composite having such a form, sufficient electron conductivity is ensured. The composite may consist essentially of the sulfur-based active material and the porous carbon, or may consist of the sulfur-based active material and the porous carbon. The state that the composite consists essentially of the sulfur-based active material and the porous carbon means that, for example, the total content of the sulfur-based active material (the total of simple sulfur and a sulfur compound) and the porous carbon in the composite is 90 mass% or more, and the total content may be 95 mass% or more, 98 mass% or more, or 99 mass% or more.

The sulfur-based active material included in the composite is a component that functions as a positive active material. The sulfur-based active material may be simple sulfur, a sulfur compound, or a mixture thereof. That is, the composite only needs to include elemental sulfur together with the porous carbon. Examples of the sulfur compound include metal sulfides such as lithium sulfide, and organic sulfur compounds such as organic disulfide compounds and carbon sulfide compounds. The sulfur-based active material has advantages such as a high theoretical capacity and low costs.

The content of elemental sulfur in the composite (the ratio of the mass of elemental sulfur to the mass of the composite) is preferably 50 mass% or more and 90 mass% or less, and more preferably 55 mass% or more and 80 mass% or less. By setting the content of elemental sulfur in the composite within the above range, for example, the energy density per mass of the positive electrode can be further increased.

The porous carbon has conductivity. The porous carbon is generally a porous inorganic material containing elemental carbon as a main constituent element. The main constituent element means an element contained at the highest content by mass. The lower limit of the content of the elemental carbon in the porous carbon is preferably 70 mass%, and more preferably 80 mass%, 90 mass%, 95 mass%, or 97 mass%. The upper limit of the content of the elemental carbon in the porous carbon may be 100 mass% or 99.9 mass%. The content of the elemental carbon in the porous carbon can be equal to or more than any of the lower limits described above, and equal to or less than any of the upper limits described above. The porous carbon may include an element, such as elemental oxygen or elemental nitrogen, other than the elemental carbon.

The upper limit of the average pore size of the porous carbon is 3 nm, preferably 3.0 nm, and more preferably 2.5 nm. If the average pore size of the porous carbon is the above upper limit or less, for example, the energy density per mass of the positive electrode can be increased. The lower limit of the average pore size of the porous carbon is, for example, 0.5 nm, and may be 1.0 nm. The average pore size of the porous carbon can be equal to or more than any of the lower limits described above, and equal to or less than any of the upper limits described above. As the porous carbon, porous carbon having an average pore size of 3 nm or less can be selected and used from conventionally known porous carbon such as active carbon.

The composite can be manufactured with a conventionally known method. For example, the composite can be obtained, for example, by heating a mixture of the sulfur-based active material and the porous carbon to the melting point of the sulfur-based active material or higher and then cooling the mixture.

The content of the composite in the positive active material layer is preferably 60 mass% or more and 95 mass% or less, and more preferably 70 mass% or more and 90 mass% or less. By setting the content of the composite within the above range, for example, the energy density per mass of the positive electrode can be further increased.

The positive active material layer may contain a positive active material other than the sulfur-based active material. However, the content of the sulfur-based active material (total of simple sulfur and a sulfur compound) in the entire positive active material is preferably 50 mass% or more, more preferably 70 mass% or more, still more preferably 90 mass% or more, still even more preferably 99 mass% or more, and particularly preferably 100 mass%.

The conductive agent is not particularly limited as long as the conductive agent is a material having conductivity. The conductive agent does not contain porous carbon included in the composite. Examples of such a conductive agent include carbonaceous materials, metals, and conductive ceramics. Examples of the carbonaceous material include graphite, non-graphitic carbon, and graphene-based carbon. Examples of the non-graphitic carbon include carbon nanofibers, pitch-based carbon fibers, and carbon black. Examples of the carbon black include furnace black, acetylene black, and ketjen black. Examples of the graphene-based carbon include graphene, carbon nanotubes (CNTs), and fullerene. Examples of the form of the conductive agent include a powdery form and a fibrous form. As the conductive agent, one of these materials may be used singly, or two or more thereof may be mixed and used. Alternatively, these materials may be used in the form of a composite. For example, a composite material of carbon black and a CNT may be used. Among them, carbon black is preferable, and in particular, acetylene black is preferable, from the viewpoint of electron conductivity and coatability. It is also preferable to use carbon black (preferably acetylene black) and a CNT in combination.

The content of the conductive agent (excluding the porous carbon in the composite) in the positive active material layer is preferably 0.5 mass% or more and 20 mass% or less, and more preferably 1 mass% or more and 15 mass% or less. By setting the content of the conductive agent within the above range, the energy density per mass of the positive electrode, or the like, can be increased.

Examples of the binder include: thermoplastic resins such as fluororesins (polytetrafluoroethylene (PTFE), polyvinylidene fluoride (PVDF), etc.), polyethylene, polypropylene, polyacryls, and polyimides; elastomers such as ethylene-propylene-diene monomer (EPDM), sulfonated EPDM, styrene butadiene rubber (SBR), and fluororubber; and polysaccharide polymers.

The content of the binder in the positive active material layer is preferably 1 mass% or more and 10 mass% or less, and more preferably 2 mass% or more and 9 mass% or less. By setting the content of the binder within the above range, the composite and the like can be stably held.

Examples of the dispersant include polysaccharide polymers such as carboxymethyl cellulose (CMC) and methyl cellulose. In a case where the dispersant includes a functional group that reacts with lithium or the like, the functional group may be deactivated in advance by methylation or the like. The content of the dispersant in the positive active material layer is preferably 0.05 mass% or more and 5 mass% or less, and more preferably 0.1 mass% or more and 2 mass% or less. The polysaccharide polymer may function as a thickener or a binder.

Examples of the thickener include polyacrylic acid (PAA). The content of the thickener in the positive active material layer is preferably 0.05 mass% or more and 5 mass% or less, and more preferably 0.1 mass% or more and 4 mass% or less. The polyacrylic acid may function as a binder.

The filler is not particularly limited. Examples of the filler include: polyolefins such as polypropylene and polyethylene; inorganic oxides such as silicon dioxide, alumina, titanium dioxide, calcium oxide, strontium oxide, barium oxide, magnesium oxide, and aluminosilicate; hydroxides such as magnesium hydroxide, calcium hydroxide, and aluminum hydroxide; carbonates such as calcium carbonate; sparingly soluble ionic crystals such as calcium fluoride, barium fluoride, and barium sulfate; nitrides such as aluminum nitride and silicon nitride; and mineral-derived materials such as talc, montmorillonite, boehmite, zeolite, apatite, kaolin, mullite, spinel, olivine, sericite, bentonite, mica, and artificial products thereof. In a case where the positive active material layer contains a filler, the content of the filler in the positive active material layer is preferably, for example, 0.1 mass% or more and 10 mass% or less. In an embodiment of the present invention, the positive active material layer may contain no filler.

The positive active material layer may contain a typical nonmetal element such as B, N, P, F, Cl, Br, or I, a typical metal element such as Li, Na, Mg, Al, K, Ca, Zn, Ga, Ge, Sn, Sr, or Ba, and a transition metal element such as Sc, Ti, V, Cr, Mn, Fe, Co, Ni, Cu, Mo, Zr, Nb, or W, as components other than the composite and another positive active material, a conductive agent, a binder, a dispersant, a thickener, and a filler.

The lower limit of the mass per unit area of the positive active material layer is 5 mg/cm², preferably 7 mg/cm², and more preferably 8 mg/cm², 10 mg/cm², or 12 mg/cm². By setting the mass per unit area of the positive active material layer to the above lower limit or more, the energy density per mass of the positive electrode can be increased. The upper limit of the mass per unit area of the positive active material layer may be 30 mg/cm², 20 mg/cm², or 10 mg/cm². The mass per unit area of the positive active material layer can be equal to or more than any of the lower limits described above, and equal to or less than any of the upper limits described above (the upper limit is greater than the lower limit).

### <Nonaqueous electrolyte energy storage device>

A nonaqueous electrolyte energy storage device according to an embodiment of the present invention (hereinafter, also simply referred to as "energy storage device") includes an electrode assembly including a positive electrode, a negative electrode, and a separator, a nonaqueous electrolyte, and a case that houses the electrode assembly and the nonaqueous electrolyte. The electrode assembly is typically a stacked type in which a plurality of positive electrodes and a plurality of negative electrodes are stacked with a separator interposed therebetween, or a wound type in which a positive electrode and a negative electrode are wound in a state of being stacked with a separator interposed therebetween. The nonaqueous electrolyte is present in a state of being contained in the positive electrode, the negative electrode, and the separator. A nonaqueous electrolyte secondary battery (hereinafter, also simply referred to as "secondary battery") will be described as an example of the nonaqueous electrolyte energy storage device.

### (Positive electrode)

As the positive electrode, the above-described positive electrode for a nonaqueous electrolyte energy storage device according to an embodiment of the present invention is used.

### (Negative electrode)

The negative electrode includes a negative electrode substrate and a negative active material layer disposed on the negative electrode substrate directly or with an intermediate layer interposed therebetween. The composition of the intermediate layer is not particularly limited, and for example, can be selected from the compositions shown as examples for the positive electrode.

The negative electrode substrate has conductivity. As a material of the negative electrode substrate, a metal such as copper, nickel, stainless steel, or nickel-plated steel, an alloy thereof, a carbonaceous material, or the like is used. Among them, nickel or a nickel alloy is preferable. Examples of the negative electrode substrate include foils, deposited films, meshes, and porous materials, and foils are preferable from the viewpoint of costs. Therefore, the negative electrode substrate is preferably a nickel foil or a nickel alloy foil. Examples of a copper foil include rolled copper foils and electrolytic copper foils.

The average thickness of the negative electrode substrate is preferably 2 µm or more and 35 µm or less, more preferably 3 µm or more and 30 µm or less, still more preferably 4 µm or more and 25 µm or less, and particularly preferably 5 µm or more and 20 µm or less. By setting the average thickness of the negative electrode substrate within the above range, the energy density per volume of the nonaqueous electrolyte energy storage device can be increased while the strength of the negative electrode substrate is increased.

The negative active material layer contains a negative active material. The negative active material layer contains, as necessary, an optional component such as a conductive agent, a binder, a thickener, or a filler. The optional component such as a conductive agent, a binder, a thickener, or a filler can be selected from the materials shown as examples for the positive electrode. The negative active material layer may contain no optional components such as a conductive agent, a binder, a thickener, and a filler.

The negative active material layer may contain a typical nonmetal element such as B, N, P, F, Cl, Br, or I, a typical metal element such as Li, Na, Mg, Al, K, Ca, Zn, Ga, Ge, Sn, Sr, or Ba, and a transition metal element such as Sc, Ti, V, Cr, Mn, Fe, Co, Ni, Cu, Mo, Zr, Ta, Hf, Nb, or W, as components other than the negative active material, a conductive agent, a binder, a thickener, and a filler.

The negative active material can be appropriately selected from known negative active materials. As a negative active material for a lithium ion secondary battery, a material capable of occluding and releasing lithium ions is typically used. Examples of the negative active material include: metallic lithium; metals and metalloids such as Si and Sn; metal oxides and metalloid oxides such as Si oxide, Ti oxide, and Sn oxide; titanium-containing oxides such as Li₄Ti₅O₁₂, LiTiO₂, and TiNb₂O₇; polyphosphoric acid compounds; silicon carbide; and carbon materials such as graphite and non-graphitic carbon (easily graphitizable carbon or non-graphitizable carbon). In the case of a negative active material containing no charge-carrying ions such as lithium ions, a material doped with lithium ions or the like can be used.

The negative active material is preferably metallic lithium. The metallic lithium may be pure metallic lithium consisting essentially of elemental lithium, or may be a lithium alloy containing another metal element. Examples of the lithium alloy include a lithium silver alloy, a lithium zinc alloy, a lithium calcium alloy, a lithium aluminum alloy, a lithium magnesium alloy, and a lithium indium alloy. The lithium alloy may contain a plurality of metal elements other than elemental lithium.

The negative active material layer may contain a negative active material other than metallic lithium. However, the negative active material layer is preferably a layer consisting essentially of metallic lithium (pure metallic lithium or a lithium alloy). The content of elemental lithium in the negative active material layer is preferably 80 mass% or more, more preferably 90 mass% or more, and still more preferably 99 mass% or more. The upper limit of the content of elemental lithium in the negative active material layer may be 100 mass%. The content of elemental lithium in the negative active material layer can be equal to or more than any of the lower limits described above, and equal to or less than, or less than the upper limit described above.

The negative active material layer may be a non-porous layer (solid layer) or a porous layer, and is preferably a non-porous layer. The negative active material layer may be a metallic lithium layer. The negative active material layer may be a layer made of a metallic lithium foil (pure metallic lithium foil or lithium alloy foil). The average thickness of the negative active material layer in a charged state is preferably 5 µm or more and 1,000 µm or less, more preferably 10 µm or more and 500 µm or less, and still more preferably 30 µm or more and 300 µm or less.

### (Separator)

The separator can be appropriately selected from known separators. Examples of the separator that can be used include a separator consisting of a substrate layer and a separator in which a heat resistant layer containing heat resistant particles and a binder is formed on one surface or both surfaces of a substrate layer. Examples of the form of the substrate layer of the separator include forms of a woven fabric, a nonwoven fabric, and a porous resin film. Among these forms, a form of a porous resin film is preferable from the viewpoint of strength, and a form of a nonwoven fabric is preferable from the viewpoint of the liquid retaining property of the nonaqueous electrolyte. A material of the substrate layer of the separator is preferably, for example, a polyolefin such as polyethylene or polypropylene from the viewpoint of shutdown function, and is preferably, for example, a polyimide, aramid, or the like from the viewpoint of resistance to oxidative decomposition. As the substrate layer of the separator, a composite material of these resins may be used.

The heat resistant particles included in the heat resistant layer are preferably such that when the temperature is increased from room temperature to 500°C in the air atmosphere at 1 atm, the mass of the heat resistant particles is reduced by 5% or less, and the heat resistant particles are more preferably such that when the temperature is increased from room temperature to 800°C, the mass of the heat resistant particles is reduced by 5% or less. Examples of a material such that the reduction in mass is equal to or less than a predetermined value include inorganic compounds. Examples of the inorganic compounds include: oxides such as iron oxide, silicon oxide, aluminum oxide, titanium oxide, zirconium oxide, calcium oxide, strontium oxide, barium oxide, magnesium oxide, and aluminosilicate; nitrides such as aluminum nitride and silicon nitride; carbonates such as calcium carbonate; sulfates such as barium sulfate; sparingly soluble ionic crystals such as calcium fluoride, barium fluoride, and barium titanate; covalent crystals such as silicon and diamond; and mineral-derived materials such as talc, montmorillonite, boehmite, zeolite, apatite, kaolin, mullite, spinel, olivine, sericite, bentonite, and mica, and artificial products thereof. As the inorganic compound, a simple material or a composite of these materials may be used singly, or two or more kinds thereof may be mixed and used. Among these inorganic compounds, silicon oxide, aluminum oxide, or aluminosilicate is preferable from the viewpoint of the safety of the nonaqueous electrolyte energy storage device.

The porosity of the separator is preferably 80 vol% or less from the viewpoint of strength, and is preferably 20 vol% or more from the viewpoint of discharge performance. Here, the "porosity" is a volume-based value, and means a value measured with a mercury porosimeter.

As the separator, a polymer gel including a polymer and a nonaqueous electrolyte may be used. Examples of the polymer include polyacrylonitrile, polyethylene oxide, polypropylene oxide, polymethyl methacrylate, polyvinyl acetate, polyvinylpyrrolidone, and polyvinylidene fluoride. An effect of suppressing liquid leakage is obtained by using the polymer gel. As the separator, the polymer gel may be used in combination with a porous resin film, a nonwoven fabric, or the like as described above.

### (Nonaqueous electrolyte)

The nonaqueous electrolyte contains a nonaqueous solvent. As the nonaqueous electrolyte, a nonaqueous electrolyte solution containing a nonaqueous solvent and an electrolyte salt dissolved in the nonaqueous solvent is typically suitably used. In an embodiment of the present invention, the nonaqueous electrolyte energy storage device may be a nonaqueous electrolyte solution energy storage device.

The nonaqueous solvent can be appropriately selected from known nonaqueous solvents. Examples of the nonaqueous solvent include carbonates, carboxylic acid esters, phosphoric acid esters, sulfonic acid esters, ethers, amides, and nitriles. As the nonaqueous solvent, one may be used in which some of the hydrogen atoms included in the compound described above are substituted with a halogen.

The nonaqueous solvent preferably contains a carbonate, and more preferably contains a carbonate as a main component. If the nonaqueous solvent contains a carbonate preferably as a main component, the energy density per mass of the positive electrode can be further increased. The lower limit of the content of the carbonate in the nonaqueous solvent is preferably 60 vol%, more preferably 70 vol%, and still more preferably 80 vol%, 90 vol%, 95 vol%, or 99 vol%. The upper limit of the content of the carbonate in the nonaqueous solvent may be 100 vol%. The nonaqueous solvent may consist of a carbonate. The content of the carbonate in the nonaqueous solvent can be equal to or more than any of the lower limits described above, and equal to or less than, or less than the upper limit described above.

The carbonate preferably includes at least one of a fluorinated cyclic carbonate or a non-fluorinated unsaturated cyclic carbonate, and more preferably includes both of these carbonates. In such a case, for example, the energy density per mass of the positive electrode can be further increased. The lower limit of the total content of the fluorinated cyclic carbonate and the non-fluorinated unsaturated cyclic carbonate in the nonaqueous solvent is preferably 60 vol%, more preferably 70 vol%, and still more preferably 80 vol%, 90 vol%, 95 vol%, or 99 vol%. The upper limit of the total content may be 100 vol%. The total content of the fluorinated cyclic carbonate and the non-fluorinated unsaturated cyclic carbonate in the nonaqueous solvent can be equal to or more than any of the lower limits described above, and equal to or less than, or less than the upper limit described above.

The term "fluorinated cyclic carbonate" refers to a compound in which some or all of the hydrogen atoms of a cyclic carbonate are substituted with fluorine atoms. The term "cyclic carbonate" refers to a carbonate having a ring structure including a carbonate group (-O-C(=O)-O-). Examples of the fluorinated cyclic carbonate include fluorinated ethylene carbonates such as fluoroethylene carbonate (FEC) and difluoroethylene carbonate (DFEC), fluorinated propylene carbonate, fluorinated butylene carbonate, and fluorinated vinylene carbonate. Among them, fluorinated ethylene carbonates are preferable, and FEC is more preferable. The fluorinated cyclic carbonate is preferably a fluorinated saturated cyclic carbonate. The term "fluorinated saturated cyclic carbonate" refers to a fluorinated cyclic carbonate having no carbon-carbon double bond and no carbon-carbon triple bond in the molecule. One or two or more kinds of the fluorinated cyclic carbonates can be used.

In a case where the nonaqueous solvent contains a fluorinated cyclic carbonate, the lower limit of the content of the fluorinated cyclic carbonate in the nonaqueous solvent is preferably 5 vol%, and may more preferably be 10 vol%, 20 vol%, 30 vol%, 40 vol%, 50 vol%, 60 vol%, 70 vol%, 80 vol%, 90 vol%, 95 vol%, or 99 vol%. Increasing the content of the fluorinated cyclic carbonate makes it easy to obtain, for example, an advantage due to an increase in ion conductivity of a film to be formed, and for example, tends to increase the average discharge voltage. The upper limit of the content of the fluorinated cyclic carbonate in the nonaqueous solvent may be 100 mass%, and may preferably be 95 vol%, 90 vol%, 80 vol%, 70 vol%, 60 vol%, 50 vol%, 40 vol%, 30 vol%, 20 vol%, or 10 vol%. Reducing the content of the fluorinated cyclic carbonate makes it easy to obtain, for example, an advantage due to the lowered viscosity of the nonaqueous electrolyte, and for example, tends to increase the discharge capacity per mass of the positive electrode. The content of the fluorinated cyclic carbonate in the nonaqueous solvent can be equal to or more than any of the lower limits described above, and equal to or less than any of the upper limits described above (the upper limit is greater than the lower limit).

The term "non-fluorinated unsaturated cyclic carbonate" refers to a compound in which hydrogen atoms of an unsaturated cyclic carbonate are not substituted with fluorine atoms. The unsaturated cyclic carbonate is a cyclic carbonate having a carbon-carbon double bond or a carbon-carbon triple bond in the molecule, and is preferably a cyclic carbonate having a carbon-carbon double bond in the molecule. Examples of the non-fluorinated unsaturated cyclic carbonate include vinylene carbonate (VC), methylvinylene carbonate, ethylvinylene carbonate, propylvinylene carbonate, butylvinylene carbonate, dimethylvinylene carbonate, diethylvinylene carbonate, dipropylvinylene carbonate, and vinylethylene carbonate, and VC is preferable. One or two or more kinds of the non-fluorinated unsaturated cyclic carbonates can be used.

In a case where the nonaqueous solvent contains a non-fluorinated unsaturated cyclic carbonate, the lower limit of the content of the non-fluorinated unsaturated cyclic carbonate in the nonaqueous solvent is preferably 5 vol%, and may more preferably be 10 vol%, 20 vol%, 30 vol%, 40 vol%, 50 vol%, 60 vol%, 70 vol%, 80 vol%, 90 vol%, 95 vol%, or 99 vol%. Increasing the content of the non-fluorinated unsaturated cyclic carbonate tends to increase the discharge capacity per mass of the positive electrode. The upper limit of the content of the non-fluorinated unsaturated cyclic carbonate in the nonaqueous solvent may be 100 vol%, and may preferably be 95 mass%, 90 vol%, 80 vol%, 70 vol%, 60 vol%, 50 vol%, 40 vol%, 30 vol%, 20 vol%, or 10 vol%. The content of the non-fluorinated unsaturated cyclic carbonate in the nonaqueous solvent can be equal to or more than any of the lower limits described above, and equal to or less than any of the upper limits described above (the upper limit is greater than the lower limit).

The volume ratio of the fluorinated cyclic carbonate to the non-fluorinated unsaturated cyclic carbonate (fluorinated cyclic carbonate : non-fluorinated unsaturated cyclic carbonate) in the nonaqueous solvent is preferably in a range of 5 : 95 to 95 : 5, more preferably in a range of 10 : 90 to 90 : 10, still more preferably in a range of 40 : 60 to 80 : 20, and still even more preferably in a range of 60 : 40 to 75 : 25. If the volume ratio of the fluorinated cyclic carbonate to the non-fluorinated unsaturated cyclic carbonate is in the above range, the balance between the fluorinated cyclic carbonate and the non-fluorinated unsaturated cyclic carbonate becomes suitable, and the energy density per mass of the positive electrode can be further increased.

As the nonaqueous solvent, another carbonate may be used other than the fluorinated cyclic carbonate and the non-fluorinated unsaturated cyclic carbonate. Examples of another carbonate include chain carbonates and non-fluorinated saturated cyclic carbonates. The term "chain carbonate" refers to a carbonate having no ring structure including a carbonate group. Examples of the chain carbonates include diethyl carbonate (DEC), dimethyl carbonate (DMC), ethyl methyl carbonate (EMC), diphenyl carbonate, 2,2,2-trifluoroethyl methyl carbonate (TFEMC), and bis(2,2,2-trifluoroethyl)carbonate (TFEC). Examples of the non-fluorinated saturated cyclic carbonate include ethylene carbonate (EC), propylene carbonate (PC), butylene carbonate (BC), and chloroethylene carbonate. Another carbonate as described above may be used together with the fluorinated cyclic carbonate and the non-fluorinated unsaturated cyclic carbonate, or may be used in place of the fluorinated cyclic carbonate and the non-fluorinated unsaturated cyclic carbonate.

The electrolyte salt can be appropriately selected from known electrolyte salts. Examples of the electrolyte salt include lithium salts, sodium salts, potassium salts, magnesium salts, and onium salts. Among these, lithium salts are preferable.

Examples of the lithium salts include inorganic lithium salts such as LiPF₆, LiPO₂F₂, LiBF₄, LiClO₄, and LiN(SO₂F)₂, lithium oxalates such as lithium bis(oxalate)borate (LiBOB), lithium difluorooxalatoborate (LiFOB), and lithium bis(oxalate)difluorophosphate (LiFOP), and lithium salts having a halogenated hydrocarbon group, such as LiSO₃CF₃, LiN(SO₂CF₃)₂, LiN(SO₂C₂F₅)₂, LiN(SO₂CF₃)(SO₂C₄F₉), LiC(SO₂CF₃)₃, and LiC(SO₂C₂F₅)₃. Among these, inorganic lithium salts are preferable, LiPF₆ and LiN(SO₂F)₂ are more preferable, and LiN(SO₂F)₂ is still more preferable. In addition, imide salts such as LiN(SO₂F)₂, LiN(SO₂CF₃)₂, LiN(SO₂C₂F₅)₂, and LiN(SO₂CF₃)(SO₂C₄F₉) are also preferable, and LiN(SO₂CF₃)₂ is more preferable.

The content of the electrolyte salt in the nonaqueous electrolyte solution at 20°C under 1 atm is preferably 0.1 mol/dm³ or more and 2.5 mol/dm³ or less, more preferably 0.3 mol/dm³ or more and 2.0 mol/dm³ or less, still more preferably 0.5 mol/dm³ or more and 1.7 mol/dm³ or less, and particularly preferably 0.7 mol/dm³ or more and 1.5 mol/dm³ or less. By setting the content of the electrolyte salt within the above range, the ionic conductivity of the nonaqueous electrolyte solution can be increased.

The nonaqueous electrolyte solution may contain an additive in addition to the nonaqueous solvent and the electrolyte salt. Examples of the additive include: oxalates such as lithium bis(oxalate)borate (LiBOB), lithium difluorooxalatoborate (LiFOB), and lithium bis(oxalate)difluorophosphate (LiFOP); imide salts such as lithium bis(fluorosulfonyl)imide (LiFSI); aromatic compounds such as biphenyl, alkylbiphenyls, terphenyl, partly hydrogenated terphenyl, cyclohexylbenzene, t-butylbenzene, t-amylbenzene, diphenyl ether, and dibenzofuran; partial halides of the aromatic compounds, such as 2-fluorobiphenyl, o-cyclohexylfluorobenzene, and p-cyclohexylfluorobenzene; halogenated anisole compounds such as 2,4-difluoroanisole, 2,5-difluoroanisole, 2,6-difluoroanisole, and 3,5-difluoroanisole; succinic anhydride, glutaric anhydride, maleic anhydride, citraconic anhydride, glutaconic anhydride, itaconic anhydride, cyclohexanedicarboxylic anhydride; ethylene sulfite, propylene sulfite, dimethyl sulfite, methyl methanesulfonate, busulfan, methyl toluenesulfonate, dimethyl sulfate, ethylene sulfate, sulfolane, dimethyl sulfone, diethyl sulfone, dimethylsulfoxide, diethylsulfoxide, tetramethylene sulfoxide, diphenyl sulfide, 4,4'-bis(2,2-dioxo-1,3,2-dioxathiolane), 4-methylsulfonyloxymethyl-2,2-dioxo-1,3,2-dioxathiolane, thioanisole, diphenyl disulfide, dipyridinium disulfide, 1,3-propene sultone, 1,3-propane sultone, 1,4-butane sultone, 1,4-butene sultone, perfluorooctane, tristrimethylsilyl borate, tristrimethylsilyl phosphate, tetrakistrimethylsilyl titanate, lithium monofluorophosphate, and lithium difluorophosphate. One of these additives may be used singly, or two or more thereof may be mixed and used.

The content of the additive contained in the nonaqueous electrolyte solution is preferably 0.01 mass% or more and 10 mass% or less, more preferably 0.1 mass% or more and 7 mass% or less, still more preferably 0.2 mass% or more and 5 mass% or less, and particularly preferably 0.3 mass% or more and 3 mass% or less with respect to the total mass of the nonaqueous electrolyte solution. By setting the content of the additive within the above range, the capacity retention performance or cycle performance after high-temperature storage can be improved, and the safety can be further improved.

As the nonaqueous electrolyte, a nonaqueous electrolyte solution and a solid electrolyte may be used in combination. The solid electrolyte can be selected from any materials that have lithium ion conductivity and are solid at normal temperature (for example, 15°C to 25°C). Examples of the solid electrolyte include sulfide solid electrolytes, oxide solid electrolytes, nitride solid electrolytes, halide solid electrolytes, and polymer solid electrolytes.

The shape of the nonaqueous electrolyte energy storage device of the present embodiment is not particularly limited, and the nonaqueous electrolyte energy storage device is, for example, a cylindrical battery, a prismatic battery, a flat battery, a coin battery, a button battery, or the like.

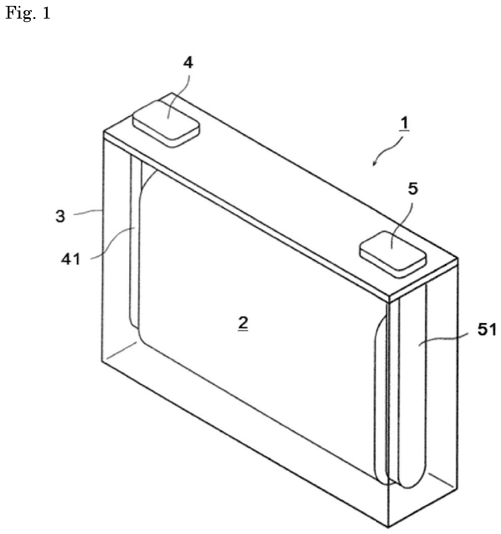

Fig. 1 illustrates a nonaqueous electrolyte energy storage device 1 as an example of a prismatic battery. Fig. 1 is a transparent view of the inside of a case. An electrode assembly 2 includes a positive electrode and a negative electrode that are wound with a separator interposed therebetween, and the electrode assembly 2 is housed in a prismatic case 3. The positive electrode is electrically connected to a positive electrode terminal 4 via a positive electrode lead 41. The negative electrode is electrically connected to a negative electrode terminal 5 via a negative electrode lead 51.

### <Energy storage apparatus>

The nonaqueous electrolyte energy storage device of the present embodiment can be mounted, as an energy storage unit (battery module) configured by assembling a plurality of nonaqueous electrolyte energy storage devices, on a power source for an automobile such as an electric vehicle (EV), a hybrid electric vehicle (HEV), or a plug-in hybrid electric vehicle (PHEV), a power source for an electronic device such as a personal computer or a communication terminal, a power source for power storage, or the like. In this case, the technique of the present invention is to be applied to at least one nonaqueous electrolyte energy storage device included in the energy storage unit.

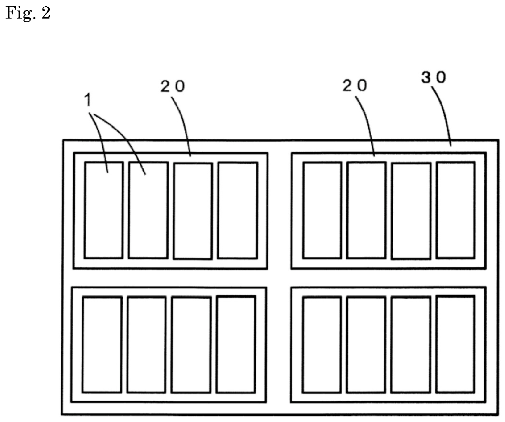

Fig. 2 illustrates an example of an energy storage apparatus 30 formed by assembling energy storage units 20 each formed by assembling two or more electrically connected nonaqueous electrolyte energy storage devices 1. The energy storage apparatus 30 may include a busbar (not illustrated) that electrically connects two or more nonaqueous electrolyte energy storage devices 1, a busbar (not illustrated) that electrically connects two or more energy storage units 20, and the like. The energy storage unit 20 or the energy storage apparatus 30 may include a state monitor (not illustrated) that monitors the state of one or more nonaqueous electrolyte energy storage devices.

### <Method of manufacturing nonaqueous electrolyte energy storage device>

A method of manufacturing the nonaqueous electrolyte energy storage device of the present embodiment can be appropriately selected from known methods. The manufacturing method includes, for example, preparing an electrode assembly, preparing a nonaqueous electrolyte, and housing the electrode assembly and the nonaqueous electrolyte in a case. Preparing an electrode assembly includes preparing a positive electrode and a negative electrode and stacking or winding the positive electrode and the negative electrode with a separator interposed therebetween to form an electrode assembly.

A method of housing the nonaqueous electrolyte in a case can be appropriately selected from known methods. For example, in the case of using a nonaqueous electrolyte solution as the nonaqueous electrolyte, the nonaqueous electrolyte solution may be injected through an inlet formed in the case, followed by sealing the inlet.

The manufacturing method may include performing initial charge-discharge of an undischarged nonaqueous electrolyte energy storage device. In typical initial charge-discharge, discharge is first started. The first discharge or the like may be referred to as formation treatment. The number of times of charge and discharge in the initial charge-discharge is not particularly limited. Through the initial charge-discharge or formation treatment, a part of the nonaqueous electrolyte is decomposed, and thus a good film can be formed on the composite of the positive electrode.

### <Other embodiments>

The nonaqueous electrolyte energy storage device of the present invention is not limited to the embodiments described above, and various changes may be made without departing from the gist of the present invention. For example, to a configuration of an embodiment, a configuration of another embodiment can be added, or a part of a configuration of an embodiment can be replaced with a configuration of another embodiment or a well-known technique. Furthermore, a part of a configuration of an embodiment can be deleted. In addition, a well-known technique can be added to a configuration of an embodiment.

The above embodiment describes a case where the nonaqueous electrolyte energy storage device is used as a nonaqueous electrolyte secondary battery (for example, lithium-sulfur battery) that can be charged and discharged, but the type, the shape, the size, the capacity, and the like of the nonaqueous electrolyte energy storage device are optionally selected. The present invention can also be applied to various secondary batteries, capacitors, and the like.

The above embodiment describes an electrode assembly including a positive electrode and a negative electrode stacked with a separator interposed therebetween, but the electrode assembly may include no separator. For example, the positive electrode and the negative electrode may be in direct contact with each other, with a non-conductive layer formed on the active material layer of the positive electrode or the negative electrode.

### EXAMPLES

Hereinafter, the present invention will be described more specifically with reference to examples, but the present invention is not limited to the following examples.

### [Example 1]

### (Production of positive electrode)

As porous carbon, microporous carbon having an average pore size of 2 nm was prepared. Simple sulfur as a sulfur-based active material and the porous carbon were mixed at a mass ratio of 70 : 30. The mixture was placed in a sealed electric furnace. After a 1-hour argon flow, a heat treatment was performed in which the temperature was increased to 150°C at a temperature increase rate of 5°C/min, the mixture was held at 150°C for 5 hours and then cooled to 80°C, which was a temperature at which simple sulfur was solidified, then the temperature was increased again to 300°C at a temperature increase rate of 5°C/min, and the mixture was held at 300°C for 2 hours, and thus a composite (sulfur-porous carbon composite: SPC) was produced.

Water was used as a dispersion medium, and a positive composite paste containing the composite obtained above, acetylene black and a CNT as a conductive agent, PAA as a thickener, CMC as a dispersant, and SBR as a binder at an appropriate mass ratio was applied to an aluminum positive electrode substrate (average thickness: 15 µm), and dried. The amount of the positive composite paste applied was adjusted so that the mass per unit area of the positive active material layer after drying the dispersion medium was 15 mg/cm². Through the above steps, a positive electrode was obtained in which the positive active material layer was layered on the positive electrode substrate. The content of the composite in the positive active material layer was 93 mass%.

### (Preparation of negative electrode)

As a negative electrode, a pure metallic lithium foil was prepared.

### (Preparation of nonaqueous electrolyte)

A nonaqueous solvent obtained by mixing fluoroethylene carbonate (FEC) and vinylene carbonate (VC) at a volume ratio of 50 : 50 was made to contain LiN(SO₂CF₃)₂ as an electrolyte salt at a content of 1.0 mol/dm³ to prepare a nonaqueous electrolyte.

### (Assembly of nonaqueous electrolyte energy storage device)

As a separator, a polyethylene microporous film was prepared. A nonaqueous electrolyte energy storage device of Example 1 was obtained using the positive electrode, the negative electrode, the separator, and the nonaqueous electrolyte described above.

### [Examples 2 to 8 and Comparative Examples 1 to 10]

Nonaqueous electrolyte energy storage devices of Examples 2 to 8 and Comparative Examples 1 to 10 were obtained in the same manner as in Example 1 except that porous carbon having an average pore size shown in Tables 1 and 2 was used and the mass per unit area of the positive active material layer and the composition of the nonaqueous solvent were changed as shown in Tables 1 and 2. Example 1 and Comparative Example 1 are described in both Table 1 and Table 2.

### [Evaluation]

### (Initial charge-discharge test)

First, each obtained nonaqueous electrolyte energy storage device was subjected to constant current discharge as a formation treatment at a current of 0.1 C up to 1.0 V.

Then, constant current charge was performed at a current of 0.1 C up to 3.0 V. Next, constant current discharge was performed at a current of 0.1 C up to 1.0 V. Note that a pause of 10 minutes was provided after discharge and after charge. The discharge, the charge, and the pausing were performed in a thermostatic bath at 25°C.

The discharge capacity per mass of the positive electrode, the average discharge voltage, the energy density per mass of the positive active material (simple sulfur) (energy density per mass of the positive active material), and the energy density per mass of the positive electrode at the time of discharge after charge were determined. Tables 1 and 2 show the results.

**[Table 1]**

| | Porous carbon | Positive active material layer | Nonaqueous solvent | | Discharge capacity per mass of positive electrode /mAh g-1 | Average discharge voltage /V | Energy density per mass of positive active material /Wh kg-1 | Energy density per mass of positive electrode /Wh kg-1 |
|---|---|---|---|---|---|---|---|---|
| | Average pore size /nm | Mass per unit area /mg cm-2 | FEC /vol% | VC /vol% | | | | |
| Example 1 | 2 | 15 | 50 | 50 | 627 | 1.75 | 2147 | 1098 |
| Example 2 | ↑ | 7 | ↑ | ↑ | 472 | 1.79 | 2176 | 843 |
| Comparative Example 1 | ↑ | 2 | ↑ | ↑ | 269 | 1.78 | 2224 | 479 |
| Comparative Example 2 | 5 | 15 | ↑ | ↑ | 8 | 1.24 | 19 | 10 |
| Comparative Example 3 | ↑ | 7 | ↑ | ↑ | 245 | 1.76 | 1046 | 431 |
| Comparative Example 4 | ↑ | 2 | ↑ | ↑ | 226 | 1.81 | 1907 | 410 |

**[Table 2]**

| | Porous carbon | Positive active material layer | Nonaqueous solvent | | Discharge capacity per mass of positive electrode /mAh g-1 | Average discharge voltage /V | Energy density per mass of positive active material /Wh kg-1 | Energy density per mass of positive electrode /Wh kg-1 |
|---|---|---|---|---|---|---|---|---|
| | Average pore size /nm | Mass per unit area /mg cm-2 | FEC /vol% | VC /vol% | | | | |
| Example 3 | 2 | 15 | 100 | 0 | 618 | 1.74 | 2099 | 1076 |
| Example 4 | ↑ | ↑ | 90 | 10 | 619 | 1.75 | 2111 | 1083 |
| Example 5 | ↑ | ↑ | 70 | 30 | 629 | 1.76 | 2166 | 1108 |
| Example 1 | ↑ | ↑ | 50 | 50 | 627 | 1.75 | 2147 | 1098 |
| Example 6 | ↑ | ↑ | 30 | 70 | 625 | 1.73 | 2111 | 1082 |
| Example 7 | ↑ | ↑ | 10 | 90 | 641 | 1.70 | 2127 | 1090 |
| Example 8 | ↑ | ↑ | 0 | 100 | 666 | 1.61 | 2096 | 1072 |
| Comparative Example 5 | 2 | 2 | 100 | 0 | 277 | 1.79 | 2299 | 495 |
| Comparative Example 6 | ↑ | ↑ | 90 | 10 | 275 | 1.79 | 2280 | 491 |
| Comparative Example 7 | ↑ | ↑ | 70 | 30 | 270 | 1.78 | 2234 | 481 |
| Comparative Example 1 | ↑ | ↑ | 50 | 50 | 269 | 1.78 | 2224 | 479 |
| Comparative Example 8 | ↑ | ↑ | 30 | 70 | 253 | 1.77 | 2081 | 448 |
| Comparative Example 9 | ↑ | ↑ | 10 | 90 | 255 | 1.76 | 2088 | 449 |
| Comparative Example 10 | ↑ | ↑ | 0 | 100 | 246 | 1.71 | 1955 | 421 |

As shown in Tables 1 and 2, in the nonaqueous electrolyte energy storage devices of Examples 1 to 8, the average pore size of the porous carbon was 3 nm or less and the mass per unit area of the positive active material layer was 5 mg/cm² or more, and these nonaqueous electrolyte energy storage devices had a high energy density per mass of the positive electrode of more than 500 Wh/kg. In a case where the average pore size of the porous carbon was 3 nm or more as in the nonaqueous electrolyte energy storage devices of Comparative Examples 2 and 3 shown in Table 1, the energy density per mass of the positive electrode was not a high value even if the mass per unit area of the positive active material layer was large.

In the nonaqueous electrolyte energy storage devices of Examples in which the average pore size of the porous carbon was 3 nm or less and the mass per unit area of the positive active material layer was 5 mg/cm² or more as shown in Table 2, the nonaqueous solvent contained a fluorinated cyclic carbonate, and thus the average discharge voltage was increased. Furthermore, the nonaqueous solvent contained a non-fluorinated unsaturated cyclic carbonate, and thus the discharge capacity per mass of the positive electrode was increased. As a result, the energy density per mass of the positive electrode tended to be increased because both the fluorinated cyclic carbonate and the non-fluorinated unsaturated cyclic carbonate were contained. This tendency is different from that of the nonaqueous electrolyte energy storage devices of Comparative Examples 5 to 10 having a mass per unit area of the positive active material layer of less than 5 mg/cm² in which the discharge capacity per mass of the positive electrode increases and the energy density per mass of the positive electrode increases as the content of the fluorinated cyclic carbonate in the nonaqueous solvent increases.

### INDUSTRIAL APPLICABILITY

The present invention can be applied to, for example, a nonaqueous electrolyte energy storage device used as a power source for an electronic device such as a personal computer or a communication terminal, an automobile, or the like.

### DESCRIPTION OF REFERENCE SIGNS

- 1: Nonaqueous electrolyte energy storage device
- 2: Electrode assembly
- 3: Case
- 4: Positive electrode terminal
- 41: Positive electrode lead
- 5: Negative electrode terminal
- 51: Negative electrode lead
- 20: Energy storage unit
- 30: Energy storage apparatus

## Claims

1. A positive electrode for a nonaqueous electrolyte energy storage device, the positive electrode comprising a positive active material layer containing a composite of a sulfur-based active material and porous carbon,
the porous carbon having an average pore size of 3 nm or less, and
the positive active material layer having a mass per unit area of 5 mg/cm² or more.

2. A nonaqueous electrolyte energy storage device comprising the positive electrode for a nonaqueous electrolyte energy storage device according to claim 1.

3. The nonaqueous electrolyte energy storage device according to claim 2, further comprising a nonaqueous electrolyte containing a nonaqueous solvent containing a carbonate as a main component of the nonaqueous solvent.

4. The nonaqueous electrolyte energy storage device according to claim 3, wherein the carbonate includes a fluorinated cyclic carbonate and a non-fluorinated unsaturated cyclic carbonate.
